# EUROPEAN PATENT APPLICATION

(11) **EP 2 282 256 A1**
(43) Date of publication of application: **09.02.2011**
(21) Application number: 09010044.7
(22) Date of filing: 04.08.2009
(51) Int. Cl.: G06F 3/048, G06F 3/041

(54) **Electronic device and method for controlling an electronic device**

(71) Applicant: Deutsche Telekom AG, 53113 Bonn (DE); Technische Universität Berlin, 10623 Berlin (DE)
(72) Inventor: Essl, Georg, 10435 Berlin (DE); Kratz, Sven, 10625 Berlin (DE); Rohs, Michael, 10783 Berlin (DE)
(74) Representative: Kampfenkel, Klaus

(57) **Abstract**

To enable a new and improved way of user input the invention proposes an electronic device (100) with a first input means (210) having a first touch-sensitive surface area (212, 214), adapted to determine the location of at least one touching object on said first touch-sensitive surface area (212, 214), a second input means (310) having a second touch-sensitive surface area (312, 314), adapted to determine the location of at least one touching object on said second touch-sensitive surface area (312, 314), a first display (220), wherein said first input means (210) is arranged as a touch screen (230) of said first display (220), at least one force sensor (631-634), which is responsive to simultaneously applying a force to said first (212, 214) and second (312, 314) touch-sensitive surface areas, and which is adapted to determine a quantitative measure of the applied force, and a control unit (520) connected to said first and second input means (210, 310), to said at least one force sensor (631-634) and to said display (220), adapted to perform a predetermined function depending on input via said first and/or second input means (210, 310) and on at least one quantitative measure of an applied force determined by said at least one force sensor (631-634).

The invention further proposes a method and a digital storage medium comprising electronically readable control instructions for controlling such an electronic device.

## Description

### Field of the invention

The invention generally relates to user interfaces, and in particular to electronic devices adapted for touch-based user interaction, such as for instance mobile communication devices, and to a method for controlling such an electronic device.

### Background of the invention

It is a central topic of mobile interaction research to try to cope with the size and form factor imposed by handheld devices. Showing interface elements in the limited screen space comes at a cost. Touch-based interactions additionally lead to occlusions of information that may be valuable. Numerous proposals have been made to improve interactions on mobile phones.

US 2007/0103454 A1 for instance describes a back-side interface for handheld mobile devices, wherein the device has separate surfaces for input and output. The input surface, e.g. the bottom, is a force-sensitive touch-surface. The output surface, e.g. the top, is a display element to present information and control elements to the user. The back surface is used for input, wherein a cursor is controlled through manipulation of the back-side touch-surface. The cursor identifies where on the back-side touch-surface the user's finger has made contact. When the cursor is positioned over the desired control element, the user selects or activates the associated function by applying pressure to the force-sensitive touch-surface with their finger.

From US 2008/0309634 A1 it is known to provide a three-dimensional object with one or more multi-touch skins, which enable multi-touch inputs during the operation of the object. It is also described that a multi-touch skin can be adapted for measuring the force of a touch in one or more directions, wherein through the touch the multi-touch skin is deformed, thereby displacing integrated slugs and influencing a measured capacitance.

It is an object of the present invention to show a new and improved way of controlling an electronic device by user input, in particular a mobile communication device provided with a touch-screen as user interface.

### Summary of the Invention

The inventive solution of the object is achieved by each of the subject matter of the respective attached independent claims. Advantageous and/or preferred embodiments or refinements are the subject matter of the respective attached dependent claims.

Accordingly, an inventive electronic device comprises a first and a second input means provided with a first and a second touch-sensitive surface area, respectively, wherein said first and second input means are adapted to determine the location of at least one touching object on the respective touch-sensitive surface area. The electronic device is further provided with a display, wherein the first input means is arranged as a touch screen of said first display. For this purpose the first input means preferably comprises a transparent layer arranged on top of the display surface. For determining a force which results from simultaneously pressing on the first and second touch-sensitive surface areas the electronic device is provided with at least one force sensor, which is responsive to simultaneously applying a force to said first and second touch-sensitive surface areas, and which is adapted to determine a quantitative measure of the applied force. A control unit is connected to the first and second input means, to the at least one force sensor and to the display, which is adapted to perform a predetermined function depending on input via said first and/or second input means and on at least one quantitative measure of an applied force determined by said at least one force sensor.

The control unit preferably comprises a micro-processor and a memory with a program stored therein, which is executable by said micro-processor. The predetermined function can be any function executable by the control unit, and may for instance comprise starting an application, changing a device mode, displaying selected content or changing the appearance of displayed content by rotating or translating a displayed object.

In particular, the electronic device is a mobile device, such as for instance a mobile communication device or a mobile device for audio and/or video playback, wherein for increased mobility the device preferably is a hand-held device with small dimensions. For a hand-held device a slim design is preferable, wherein the size in one space dimension is significantly smaller than in the others. Accordingly, the electronic device typically is provided with a front and a back side, wherein said display and said first input means are arranged on the front side and the second input means is arranged on the back side. In a preferred embodiment a second display is provided, wherein the second input means is arranged as a touch screen of said second display.

A common technology that can be used for providing the touch-sensitive surface areas of the first and second input means is capacitive sensing, wherein a capacitive sensor is provided, which typically comprises a glass substrate coated with a transparent conductor, such as indium tin oxide (ITO). An advantageous type of capacitive sensing is also the projected capacitive touch (PCT) technology which involves the relationship between an XY array of sensing wires embedded within two layers of non-metallic material and a third object, such as a human finger. The touch-sensitive surface areas of the first and second input means can also be realized by a variety of other techniques.

For instance, the touch-sensitive surface area can be provided by a resistive panel, comprising at least two electrically conductive layers separated by a narrow gap, wherein by pressing on the panel's surface the two layers become connected, thereby changing an electrical current. Also surface acoustic wave (SAW) technology can advantageously be utilized, which uses ultrasonic waves passing over the touch-sensitive surface area. The first and second input means can also be adapted to determine a touch event with optical means, which for instance comprise an array of light-emitting diodes (LEDs) with photosensors arranged opposite to the LEDs. The described techniques are exemplary only. Any other suitable, also future, technique lies within the scope of the invention.

By employing at least one force sensor that is responsive to simultaneously applying a force to the first and second touch-sensitive surface areas the invention allows for two-sided touch sensing with pressure input, wherein various interaction techniques become possible with this setup. The advantage of a two-sided pressure interaction is that it enables high degree-of-freedom input locally. Hence rather complex, yet natural interactions can be designed using little finger motion and little device space. Two-sided touch interactions that use pressure can recognize human input that is typically used in everyday interactions such as grabbing, sliding, twisting and turning while holding an object between thumb and index finger.

A main idea of the invention is to make available a large number of degrees of freedom for user input which can be utilized for the design of a user interface (UI) for small displays, wherein the degrees of freedom preferably are available locally, i.e. at or near the point of interaction. By enabling the manipulation of a large number of parameters with no or limited motion, with great advantage display space frees up for content which would otherwise be used up for UI elements. Thus the amount of occlusion is reduced.

In the inventive electronic device a large number of parameters preferably is given by simultaneous touch events on the first and second touch-sensitive surface areas and by the amount of force determined by the at least one force sensor. Based on these parameters a predetermined function is performed by the control unit.

With advantage as a further parameter for performing the predetermined function the orientation of the pressure exerted on the first and on the second touch-sensitive surface area is used. Accordingly, the predetermined function preferably is performed depending on the orientation of a pressure axis, wherein said orientation is determined from a first location of a touching object on the first touch-sensitive surface area and a second location of a touching object on the second touch-sensitive surface area, and/or from at least one difference between quantitative measures of an applied force provided by at least two of said force sensors.

In a most preferred embodiment the control unit is adapted to detect input gestures by analyzing a sequence of detected touch locations. Preferably the control unit is adapted to simultaneously detect a first input gesture inputted via said first touch-sensitive area and a second input gesture inputted via said second first touch-sensitive area.

Since the first and/or the second input means is provided as a touch screen, the user input preferably is interpreted in relation to the display content. Accordingly, the control unit with advantage is adapted to display at least one control element on the first and/or second display, and to perform the predetermined function depending on a location of the first input gesture on the first touch-sensitive area and/or a location of the second input gesture on the second touch-sensitive area in relation to the display position of said control element on the first and/or second display. The location of the input gesture which is respectively taken into account may for example be the current touched location or it may be a starting location of a sequence of touched locations.

For ease of use when simultaneously providing input via the first and second input means using two fingers of the same hand, preferably the thumb and the index finger, control elements preferably are displayed in a display area located at the edge of the first and/or second display.

In a most preferred embodiment the predetermined function is performed depending on the relative direction of a first and a second input gesture, wherein the first input gesture having a first direction is defined by a sequence of detected locations of a touching object on the first touch-sensitive surface area and the second input gesture having a second direction is defined by a sequence of detected locations of a touching object on the second touch-sensitive surface area. For instance, a first and a second input gesture having essentially the same direction may cause a displayed object to be translated, while a first and a second input gesture having opposite directions may cause a displayed object to be rotated.

In the simplest case a sequence of detected locations comprises two locations, wherein each of said first and second directions is defined by the direction of a respective vector between said two locations. However, a sequence may with advantage also comprise several detected locations. In that case each of said first and second directions preferably is defined by the direction of a mean vector, resulting from summation of the vectors between consecutive detected locations.

For the at least one force sensor to be responsive to simultaneously applying a force to the first and second touch-sensitive surface areas, it is preferably arranged between said first and second touch-sensitive surface areas and separate from the first and second input means. In particular, the first touch-sensitive surface area is arranged in a first plane, said second touch-sensitive surface area is arranged in a second plane, and the at least one force sensor is arranged between said first and second planes, in particular in a third plane, wherein said first, second and third planes preferably are essentially parallel. In a preferred embodiment the first touch-sensitive surface area is arranged on the front-side and the second touch-sensitive surface area is arranged on the back-side of a mobile electronic device, and the at least one force sensor is arranged within the housing of the mobile electronic device. For practical purposes the at least one force sensor is coupled to the first and to the second input means, allowing a force exerted on the first and/or second touch-sensitive surface area to be passed on to the at least one force sensor.

In a most preferred embodiment a plurality of force sensors, i.e. two or more, are arranged at different locations in said third plane, allowing to determine a direction of the pressure simultaneously applied to the first and second touch-sensitive surface areas. For this purpose the force sensors preferably are arranged in a symmetric configuration within the third plane. Accordingly, with advantage an even number of force sensors is utilized. With four force sensors arranged in a rectangle a direction can be determined using a technique similar to the working of a joystick. For higher precision also a higher number of force sensors, for instance eight sensors arranged in an octagon, may advantageously be used.

For coupling the force sensors to the first and second input means preferably at least one damping element is arranged between a first object and a second object, wherein the first object is the first input means or a force sensor and the second object is the second input means or a force sensor. Most preferably between each force sensor and the first input means and also between each force sensor and the second input means a damping element is arranged. In a preferred embodiment a damping element comprises an elastic material which extends from the first object to the second object. As an elastic material for instance an elastomeric plastic can be used.

Preferably the first and/or the second input means is adapted for detecting multi-touch events. Accordingly, the first and/or second input means is adapted to simultaneously determine different locations of at least two touching objects on the respective touch-sensitive surface area. When multi-touch events are detected by accordingly adapted input means, preferably a single one of a plurality of detected locations or input gestures is selected depending on the relative position of said detected locations or input gestures to a displayed control element.

An inventive method for controlling an electronic device, in particular an electronic device as described above, comprises detecting a first input via a first input means having a first touch-sensitive surface area, detecting a second input via a second input means having a second touch-sensitive surface area, determining at least one quantitative measure of a force simultaneously applied to the first and second touch-sensitive surface areas by at least one force sensor, and performing a predetermined function depending on said detected first and/or second inputs and on the at least one determined quantitative measure of a force.

The method preferably comprises determining the orientation of a pressure axis from a first location of a touching object on the first touch-sensitive surface area and a second location of a touching object on the second touch-sensitive surface area, and/or from at least one difference between quantitative measures of an applied force provided by at least two of said force sensors, performing said predetermined function depending on the orientation of said pressure axis.

In a preferred embodiment of the inventive method a first input gesture inputted via said first touch-sensitive area and a second input gesture inputted via said second first touch-sensitive area is detected by the control unit. With advantage the predetermined function is performed depending on a location of the first input gesture on the first touch-sensitive area and/or a location of the second input gesture on the second touch-sensitive area in relation to the display position of a control element displayed on the first and/or second display, wherein said control element preferably is displayed in a display area located at the edge of the first and/or second display.

In a most preferred embodiment of the inventive method the predetermined function is performed depending on the relative direction of a first and a second input gesture, wherein the first input gesture having a first direction is defined by a sequence of detected locations of a touching object on the first touch-sensitive surface area and the second input gesture having a second direction is defined by a sequence of detected locations of a touching object on the second touch-sensitive surface area.

For performing the inventive method the inventive electronic devices preferably are provided with a micro-processor and a memory in which electronically readable instructions are stored which are executable by said micro-processor in order to execute any of the embodiments of the above described method.

To provide an easy implementation and/or specific adaptation of the invention, also a digital storage medium lies within the scope of the invention, comprising said electronically readable control instructions adapted to execute any of the embodiments of the above described method, when inserted into the respective device.

### Brief Description of the Figures

It is shown in
- Fig. 1: schematically the components of a preferred embodiment of an inventive electronic device,
- Fig. 2: schematically a preferred arrangement of force sensors,
- Fig. 3: schematically a front and back view of a first variant of a preferred embodiment of an inventive electronic device,
- Fig. 4: schematically a front and back view of a second variant of a preferred embodiment of an inventive electronic device,
- Fig. 5: schematically the setup of four force sensors and a number of damping elements in a preferred embodiment of an inventive device,
- Fig. 6: schematically a sectional view of the device shown in Fig. 5,
- Fig. 7a: schematically the translation of a displayed object effected by user input,
- Fig. 7b: schematically the rotation of a displayed object effected by user input,
- Fig. 8: schematically a pressure axis resulting from pressing with index finger and thumb on front and back side of an inventive electronic device,
- Fig. 9: schematically an exemplary control element, and
- Fig. 10: schematically an interaction with a group of displayed objects by means of user input.

### Detailed Description of the Invention

Subsequently, preferred but exemplar embodiments of the invention are described in more detail with regard to the figures. Same reference numbers indicate same or similar components.

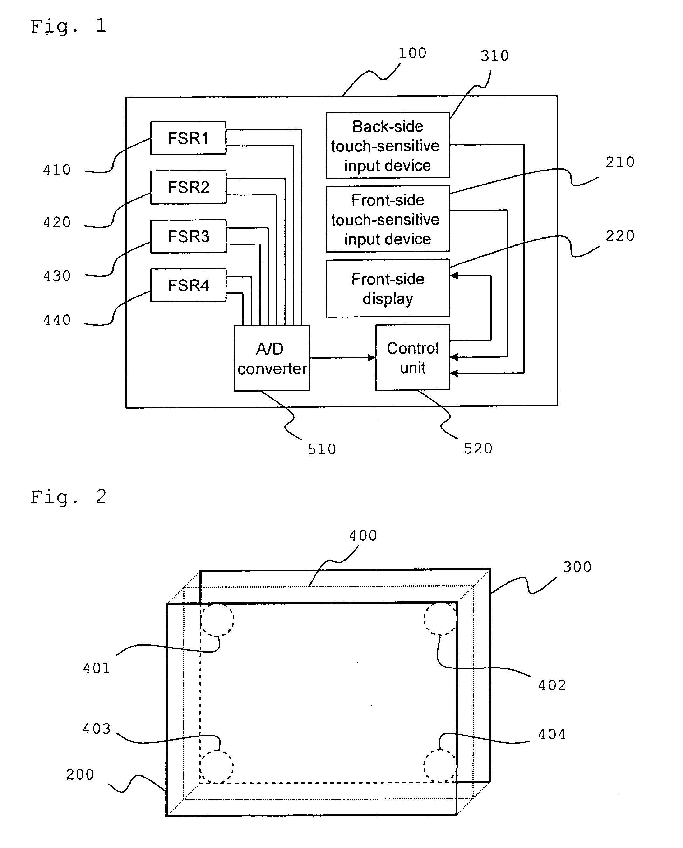

In Fig. 1 schematically the components of a preferred embodiment of an inventive device 100 are shown, wherein the device preferably is a hand-held mobile electronic device, such as a mobile phone, a PDA or an audio-player. The size of device 100 hence preferably is such to be comfortably held by one or both hands.

The mobile electronic device 100 is capable of sensing two-sided grabbing and turning gestures with sensing of the applied pressure. For this purpose a front-side touch-sensitive input device 210 and a back-side touch-sensitive input device 310 are provided. In the shown embodiment the front-side touch-sensitive input device 210 is provided as a touch screen in conjunction with a front-side display 220. Although not shown, also the back-side touch-sensitive input device 310 could be provided as a touch screen in conjunction with an additional back-side display. Information on the touch events detected by the touch-sensitive input devices 210 and 310 is provided digitally to a central control unit 520, which preferably comprises a microprocessor adapted to execute a stored software program. The control unit 520 is adapted to display control elements for controlling the electronic device 100 on the display 220. The front-side and back-side touch-sensitive input devices 210 and 310 preferably are adapted to detect multi-touch events by means of accordingly adapted multi-touch sensors.

For sensing a pressure simultaneously applied to the front-and back-side touch-sensitive input devices in the shown embodiment four force sensors 410, 420, 430 and 440 are provided. Each of the force sensors provides a continuous analog signal depending on the applied force. In the shown embodiment the force sensors are provided as force sensing resistors (FSR), but may also be of any other suitable design. The analog signals are converted by means of an A/D converter 510 into a digital signal which is provided to the control unit 520. The A/D converter 510 may also be integrated into control unit 500, for instance embedded in a microcontroller or microprocessor. In a prototype set up by the inventors the force-sensing resistors are connected to a simple custom board containing matched resistors for voltage division entering into an Arduino micro-controller board. The inventors found that at this voltage division rate the force sensing is well tuned for typical forces exerted by humans with their fingers and hand grip.

Fig. 2 schematically shows a preferred principle arrangement of the force sensors shown in Fig. 1, wherein force sensors 410, 420, 430 and 440 are arranged at the shown positions 401, 402, 403 and 404, respectively. The positions 401-404 are located within a common plane 400, which is situated between the planes 200 and 300, wherein the plane 200 is defined by the touch-sensitive surface of front-side touch-sensitive input device 210 and the plane 300 is defined by the touch-sensitive surface of back-side touch-sensitive input device 310.

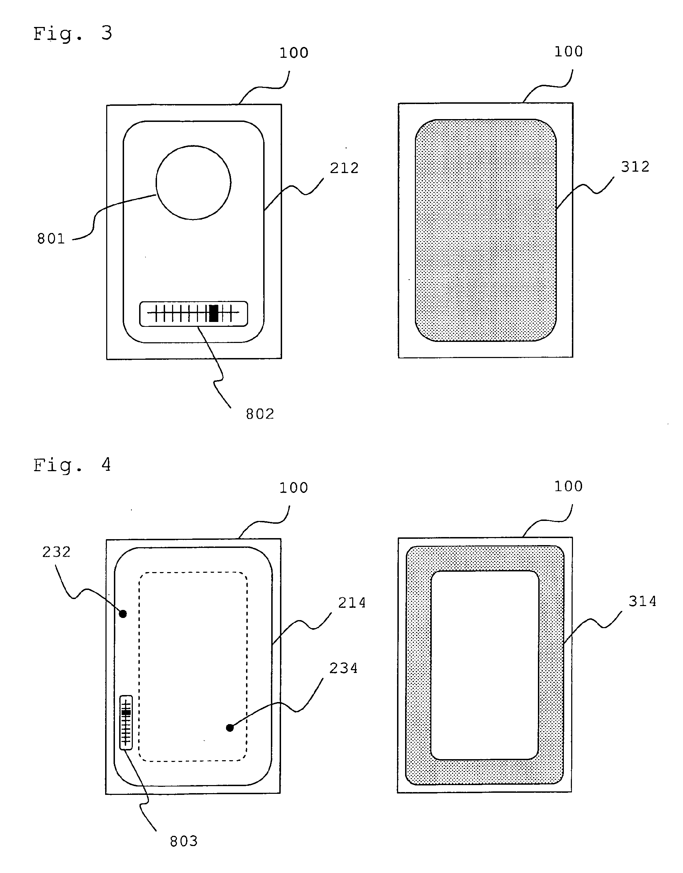

In Figures 3 and 4 two variants of a design of the front-and back-side touch-sensitive input devices 210 and 310 of device 100 are schematically shown.

In Fig. 3 a first variant is shown, wherein on the front-side of device 100, shown on the left, an I/O means 212 is arranged, comprising a touch-screen and a corresponding display. In this first variant control elements, exemplary indicated by reference numerals 801 and 802 are displayed at any location of the display. On the back-side of device 100, shown on the right of Fig. 3, a touch panel 312 is arranged opposite to the I/O means 212, wherein I/O means 212 and touch panel 312 have matching sizes.

In the second variant, shown in Fig. 4, on the front-side of device 100, shown on the left, an I/O means 214 is arranged, also comprising a touch-screen and a corresponding display. In the second variant, however, control elements, exemplary indicated by reference numeral 803, are displayed only in the edge region 232 of the display. In the second variant on the back-side of device 100, shown on the right of Fig. 4, a touch panel 314 is arranged opposite to the I/O means 214, wherein the touch panel 314 matches the dimensions of the edge region 232.

The second variant is especially advantageous, if the device 100 has larger dimensions, which prevent a user to simultaneously reach a location within the inside region 234 on the front-side of device 100 and a corresponding location on the back-side with thumb and index-finger of the same hand.

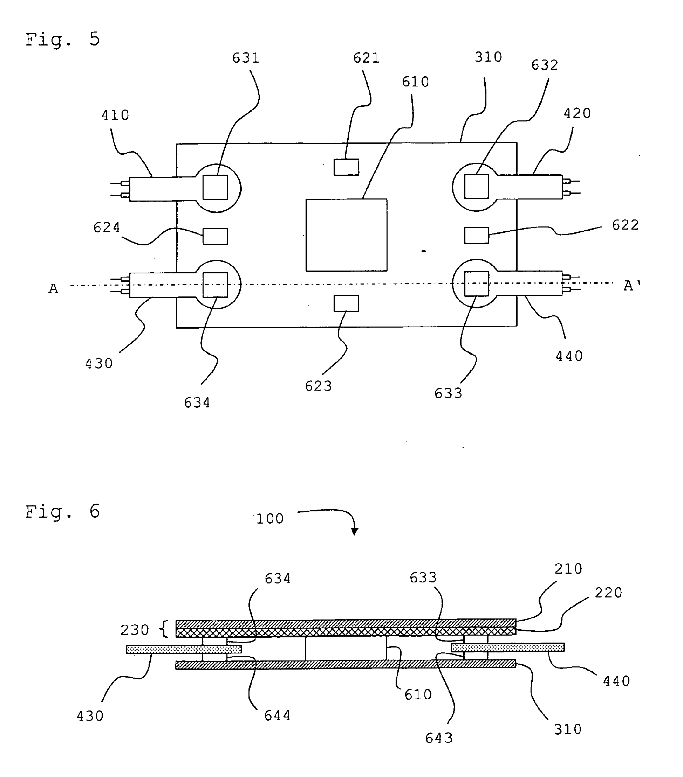

In Figures 5 and 6 the coupling of the force-sensing resistors 410, 420, 430 and 440 to the front-side and back-side touch-sensitive input devices 210 and 230 by means of damping elements is shown, wherein Fig. 6 shows a cross-section of Fig. 5 along the line A-A'.

The selection of four force sensing resistors has the advantage that thereby a directionality of the pressure information can be determined. The sensors 410, 420, 430 and 440 are arranged in a rectangular pattern, one near each corner of the device 100. The combination of the sensors hence gives a pattern, from which can be determined where pressure was applied, mimicking the axis of a traditional joystick.

Preferably the effects on neighboring force sensors are separated by separately coupling the force sensors 410, 420, 430 and 440 to the touch-sensitive input devices 210 and 310, thereby retaining good sensitivity of the force-sensing resistors. The inventors found that a wide dynamic range of the force-sensing resistors 410, 420, 430 and 440 is achieved, when they are coupled to the touch-sensitive input devices 210 and 310 via elastic damping elements. In Fig. 5, which provides a front view of device 100, for simplicity only the back-side touch-sensitive input device 310 is shown, while the front- side touch-sensitive input device 210 is not shown. The force-sensing resistors 410, 420, 430 and 440 are coupled to the front-side input device 210 by the damping elements 631-634, respectively. As can be seen in Fig. 6, the damping elements 631-634 are attached to the I/O means 230, comprising the front-side touch-sensitive input device 210 and the display 220. Corresponding damping elements for coupling the force-sensing resistors 410, 420, 430 and 440 to the back-side input device 310 are provided, which however are occluded in Fig. 5. Two of these damping elements, i.e. damping elements 643 and 644, can however be seen in Fig. 6.

Further, a good separation of the individual sensors 410, 420, 430 and 440 is achieved, when also damping elements 610 and 621-624 are arranged between the front-side and back-side touch-sensitive input devices 210 and 310 at locations in between each pair of the sensors 410, 420, 430 and 440. In the shown embodiment the center damping element 610 has a larger dimension than the damping elements 621-624. The damping elements 610, 621-624 and 631-634 preferably comprise an elastic material, as for instance an elastomeric plastic and may be attached for instance by gluing. Alternatively the damping elements may also be held mechanically in the desired location, for instance by means of an accordingly adapted housing design of device 100. Furthermore, with advantage a thin spacer layer, e.g. made of acrylic glass, may be placed between the front and back components. The spacer layer provides support for the force sensors and preferably has grooves and cut-outs for the cabling of the force sensors. This increases the stability and durability of the assembly.

In order to match human grabbing gestures, multiple locally available continuous degrees of freedom are provided by sensing of front and back grabbing positions, and continuous sensing of grabbing force.

The invention preferably provides said multiple degrees of freedom by utilizing a dual touch surface configuration with opposing surfaces, continuous force sensing with multiple force sensors and analysis of simultaneous front-surface and back-surface input gestures, wherein user interface elements are provided, the control of which is based on simultaneous front/back input gestures.

With special advantage an inventive device provides precise pressure sensitivity in the context of two-surface interactions and in simultaneous pressure-based front- and back-surface interactions, wherein the two-surface interactions may also be multi-touch interactions. In a typical gesture the thumb is placed on the front surface and the index finger is placed on the back surface. This allows for precise control of position and pressure between thumb and index finger, which enables novel options of controlling user interfaces, while previous touch screens are limited to finger position.

Preferably multiple force sensing resistors between touch-sensitive surfaces are used to give position dependent pressure information of gestures around the device, frontal pressure, and back pressure. By using multiple force sensors gradients of forces between different positions of applying pressure can be derived. The front-back arrangement of touch-sensitive surfaces allows simultaneous front-back interactions. The combinations of those two in turn allows to provide local high-degrees of freedom by combining the various sensing technologies. Locally one has displacement motion from the touch-sensitive surfaces, front and back. The relative positions of these touch points form an axis. If the touch positions move in the same direction there is no rotation, if however, they move in opposite direction the combined motion corresponds to turning of a knob. An additional dimension is pressure, which is used to continuously determine how vigorously a turning gesture is performed.

Furthermore there are natural hand motor actions that are not typically supported on traditional mobile devices. Primary among those motor actions are grabbing, twisting, turning, and squeezing. All these actions rely on two opposing fingers, typically thumb and index finger. Many known touch interfaces either place all fingers on equal footing, or rely on a point-and-touch paradigm for all their interactions.

While applying pressure to a flat surface is a possible form of interaction, it also poses certain difficulties. One is that it is often not intuitive what kind of counter-force one is to expect from a surface. A surface can be movable, be loosely mounted, elastic, etc. In particular, pen-based handheld pressure input suffers from the problem of changing reacting forces changing from solid tabletops to the softer counterforces in handheld interactions.

In an everyday grabbing action like holding we control the pressure to the object directly by simultaneously applying the forward-acting force and the counter-acting force. The invention enables opposing thumb actions that are advantageous over tapping and surface pressure actions and allow more fine-grained pressure control.

In existing control-elements force is often used to give extra information and define states of a system. For example car manual gearing shifts often offer additional counter-force when one tries to shift into the reverse gear, in order to safe-guard against accidental shifting into reverse while driving forward. These shift types also serve another function, which is state preview. The driver can shift into reverse position without it taking effect and only if the state is found to be the desired one, can she apply extra force to execute the decision of actually entering the state of reverse gearing. In the absence of force or pressure there is a need for some extra interaction element or user interface element to allow for the distinction between preview and select.

This makes apparent a special advantage of the invention that by having multiple degrees of freedom at a single location of touch which naturally relate to hand/finger-motor action, one can simplify and at the same time reduce the need for extra user interface elements.

In a preferred embodiment the invention aims to interact with a single point of contact simultaneously from the front- and the back-side. In thumb-index-finger pinching, the same location on the screen can be touched from two sides. Minute shifts of the touch points of the two fingers can be used to define rotations around arbitrary axes. In addition, the location between thumb and index finger can be squeezed with high precision to generate additional information.

Grasping requires reaching around the device. For small devices this does not impose any restrictions as the fingers can reach every point on the surface. For larger displays, however, there may be a middle area that cannot be reached while maintaining the grasping position. As described above with reference to Fig. 4, in that case control preferably is exerted in the neighborhood of the edge of the device via specialized widgets that use the degrees of freedom possible for grasping, i.e. precise pressure and localized rotations around arbitrary axes.

Pressure control by squeezing thumb and index finger is more precise than controlling the pressure a pen applies onto a surface, the latter setup being often found in known systems.

Pressure-sensitive dual-surface interaction opens up a large design space of rich interactions of which some are described in the following. However, this list is not exhaustive and many further interaction possibilities are enabled with the inventive concept.

Traditional graphical user interfaces often use widgets for interactions. Widgets are user interface elements with characteristic visual representations that provide affordances and feedback about possible interactions with the user interface. Examples are scroll bars, check boxes, and drop-down menus. Usually these widgets relate directly to a two-dimensional display and interaction surface. They are normally operated with a single-point cursor.

In the inventive setup, while the display is still two-dimensional, the interactions have more degrees of freedom than two. The user can control the device 100 with multiple fingers simultaneously and by applying different amounts of contact pressure between the finger and the device 100. In order to effectively support this more expressive type of interaction the control unit 520 of device 100 preferably is adapted to provide special user interface elements that provide the right affordances. In particular the user interface elements respond to a third interaction dimension from pressure, and in addition convey affordances relating to relative motion of front and back finger in grabbing, turning, and twisting motions.

The invention enables the simultaneous use of thumb and index finger in a coordinated manner. The device comprising two touch screens, or one touch screen and one touch pad, measures the contact points on each surface and interprets them in conjunction with their relative position, resulting in a high-degree of freedom local input. Without changes in hand position, the user has an expressive means to provide input. The pressure between thumb and index finger can be precisely varied to control a continuous variable. Moreover, the relative x-y positions of thumb and index fingers can be interpreted as two points of an axis in 3D. This input can thus be mapped to rotated 3D virtual objects very intuitively.

In the physical world, moving two opposing fingers, such as thumb and index finger, in the same direction usually affords sliding, while moving opposing fingers in opposite directions corresponds to twisting or turning of physical objects. In classical user interface elements only a single kind of motion is available and multiple modes have to be introduced to map the same motion to either sliding or turning. The difference is usually only indicated by the affordance of the currently active widget rather than the actual physical motion.

In the inventive two-sided interaction the input method with can be matched with the goal of the interaction and indeed match rotating motions with rotating widgets and sliding motions with sliding widgets. Furthermore, by utilizing the invention a user interface element can offer both at once, i.e. without a mode switch, which is not possible traditionally, and it can additionally respond to the strength with which it is being squeezed.

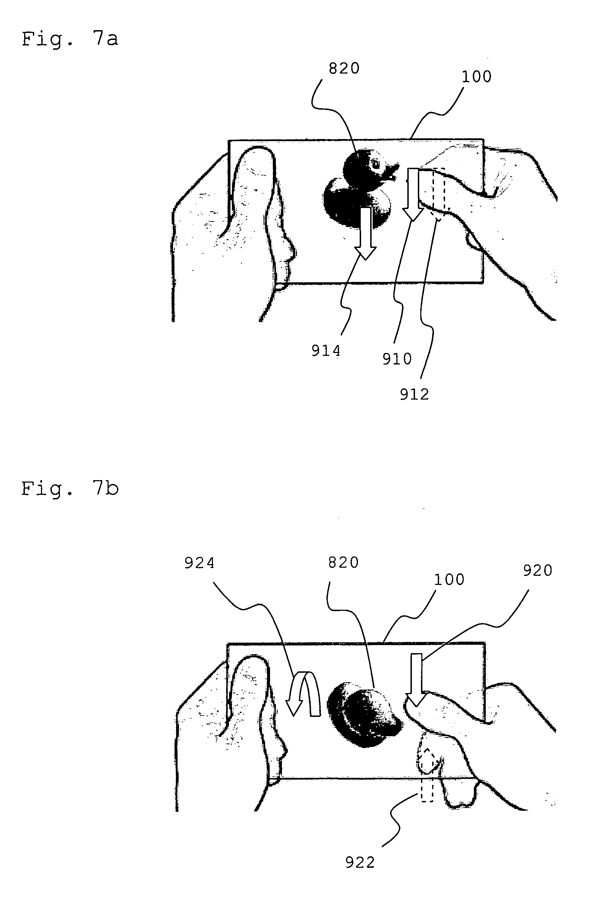

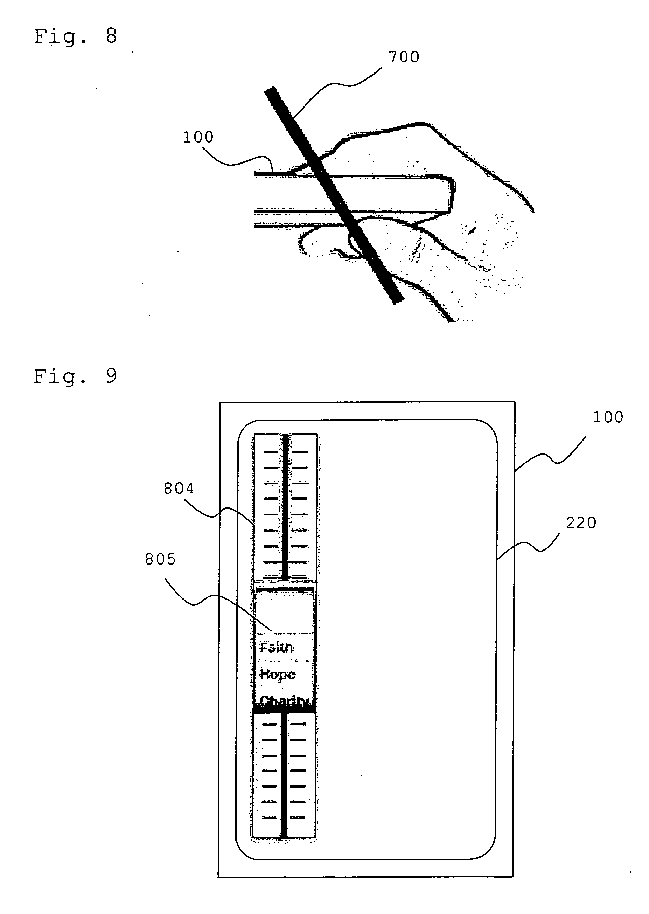

Simultaneous touch from the front and back allows for high-degree of freedom input. Without changing modes a 3D object can simultaneously be translated on the screen, rotated, and scaled, with only slight changes in the relative positioning of thumb and index finger. A translation 914 of a displayed object 820 is shown in Fig. 7a. The translation is caused by detecting a first input gesture 910 inputted via the front-side touch-sensitive input device 210 and a second input gesture 912 inputted via the back-side touch-sensitive input device 310, wherein the first and second input gestures 910 and 912 have essentially the same direction. A rotation 924 of a displayed object 820 is shown in Fig. 7b. The rotation is caused by detecting first and second input gestures 920 and 922 which have essentially opposite directions. The axis of rotation can freely be chosen by adjusting the relative positions of the fingers. By using pressure, the object can simultaneously be scaled. The positions of the fingers define a pressure axis 700, as shown in Fig. 8. The rotation axis of a rotation preferably lies within the image plane of the display and is perpendicular to the pressure axis 700, defined by the current finger positions. This kind of interaction is also highly suitable for navigating 3D scenes in a game. However, ergonomic limitations prevent access to objects at arbitrary positions on the screen, especially if the screen is larger. Hence preferably specialized widgets are positioned on the border of the screen to ensure reachability.

In Fig. 9 an exemplary widget is shown which utilizes the inventive concept, in the following referred to as grab-wheel, a rotational element along one axis which can also be moved. The grab-wheel uses a standard rotary user interface element 805 that can however be interacted with like a real 1D rotational object like a screw or a door knob. Additionally the wheel can be pressed on, hence offering an additional parameter on top of a typical widget of this type. Finally the widget itself can be made responsive to a sliding motion gesture. If both the front and back finger hold the grab-wheel and move in the same direction, then this does not constitute rotation but motion and the grab-wheel can be dragged along with the fingers. This allows for localized compact hybridization of widgets that are normally distinct. This can be illustrated by taking the wheel widget or the scrollbar widget as an example. The grab-wheel widget can be embedded in a scrollbar 804. If the wheel is dragged it serves the primary function that is known from scroll bars, if the wheel is turned it serves its local wheel function. Finally, if the wheel is pressed on, it offers a further smooth dimension for interaction. This can be visualized by having the wheel shrink and recede under pressure. Hence, the grab-wheel widget combines a rotary thumb controller 805 with a slider 804 in order to enable high degree of freedom local input.

A further exemplary widget 801 is shown in Fig. 3, in the following referred to as twist-globe 801, which can be rotated about an arbitrary axis, hence offering track-ball-like interactions, and can be squeezed at the same time.

The twist-globe widget 801 serves as a pressure-sensitive rotary controller. A typical rotation is induced by moving the thumb and finger in different directions along some axis. The twist-globe turns in whichever direction is suggested by the relative un-aligned motion of the front and back fingers and hence exposes all rotational possibilities of the conical interaction space of local two-sided interactions. The globe can be scaled by applying pressure.

The grab-gesture can be used to introduce an additional way of manipulating graphical user interface widgets and on-screen objects. The widgets can be used in one way by touching them from the front only, from the back only, or from front and back simultaneously. For example, a dragging gesture could be interpreted differently depending on the side from which it is executed. Dragging from the front-side only could be interpreted as moving an object from one place to another, as in rearranging icons on the screen. Dragging from front and back could be interpreted as a copy operation. Dragging from the back could be mapped to rubber band selection. Alternatively, an object could be selected when touched from the front side and a context menu could be shown when an object is touched from the back surface.

Pressure-sensitive dual-surface interaction enables two-directional buttons. Pressing in the front is mapped to zooming in, pressing on the back is mapped to zooming out. This allows pressure to be interpreted as negative or positive.

The inventive pressure-based two-sided interaction is a general interaction concept, for which in the following some examples are given. In the following examples it is assumed that the left hand is the non-dominant hand, which plays a supportive role and sets the frame of reference for the actions of the other hand. However, the non-dominant hand does not have to be passive, but can take part in the interaction by varying the pressure on the device while staying at a local position relative to the screen.

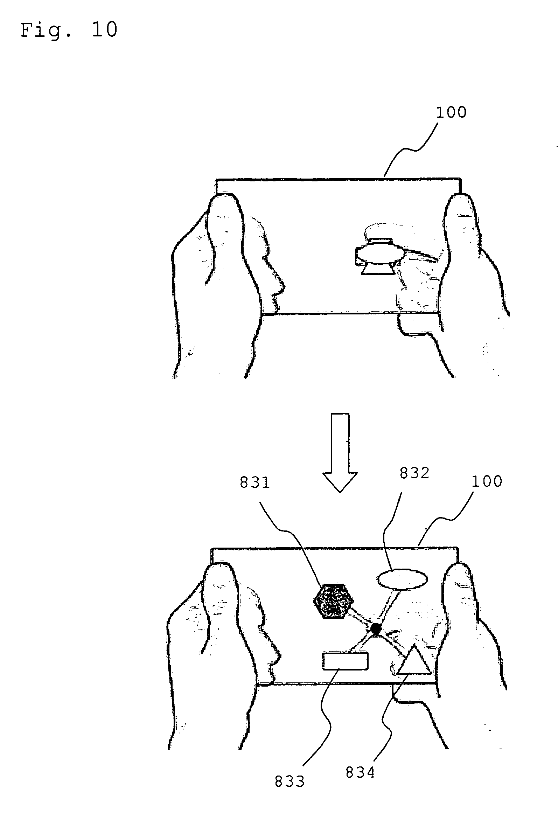

In Fig. 10 an interaction with a group of occluded elements 831-834 is schematically shown, wherein the interaction causes the displayed elements to be spread apart and made accessible for manipulation. The amount of pressure preferably is mapped to the spreading width. On small screens multiple graphical elements are often hidden, because they occlude each other as shown in the top half of Fig. 10. Pressing the back of the device 100 allows controlling the amount of spreading of the group elements 831-834, as shown in the bottom of Fig. 10, and allows conveniently accessing and manipulating them with the thumb or the other hand.

In another embodiment the back of a map is pressed with the index finger, thereby locally enlarging the map and revealing points of interest, wherein increasing the pressure is mapped to enlarging the points of interest and semantically zooming in to reveal more levels of detail.

In the map navigation example the left hand's main role preferably is to hold the device, but in addition it supports the interaction locally. The direction of scrolling is controlled by the relative positions of thumb and index finger, while the rate of scrolling is controlled by pressure. Pressing the index finger of the right hand on the back of the device preferably shows a fisheye distortion around the touch point and magnifies the nearby points of interest (POIs). Applying pressure increases the number and size of the POIs and the amount of distortion. Moreover, increasing the pressure changes the level of detail of the POIs, revealing more and more information.

Pressure-sensitive interfaces are advantageous as well for simultaneous two-handed input. The distribution of work could be in such a way that the non-dominant hand applies different amounts of pressure whereas the dominant hand carries out pointing tasks. For example, in the map navigation example the left hand's main role is to hold the device. The left hand could control zoom level by applying different amounts of pressure, while the index finger of the right hand side points to objects of interest. When zooms level is mapped via rate control the zoom direction can be changed via slight movements of the index finger relative to the thumb. In particular, applying pressure while the index finger is above the thumb could be mapped to zooming in, while applying pressure while the index finger is below the thumb controls zooming out.

In still another embodiment simultaneous pressure from front and back touch points allows for layering objects at different depths. This allows for interfaces that contain stacks of objects, e.g. photos, and that allow for easily rearranging these objects without having to spread them apart in a 2D manner.

Two-sided interaction allows for a natural separation of modes, such that the non-dominant hand can control a tool, while the dominant hand performs precise input, wherein the addition of pressure-sensitivity allows for manipulating attributes of tools using pressure.

With a setup of two-sided pressure-based interactions on touch screens of mobile devices the grabbing ability of opposing thumb and fingers can be exploited in ways that are akin to natural and familiar manipulations. Grabbing is a natural way of applying pressure. Any neighborhood of an interaction point hence offers a number of degrees of freedom allowing for a range of complex interactions being performed locally. For example it becomes possible to combine classical user interface elements into more compact and more complex elements, hence saving screen space and reducing finger motion.

## Claims

1. An electronic device (100), in particular a mobile communication device, comprising
- a first input means (210) with a first touch-sensitive surface area (212, 214), adapted to determine the location of at least one touching object on said first touch-sensitive surface area (212, 214),
- a second input means (310) with a second touch-sensitive surface area (312, 314), adapted to determine the location of at least one touching object on said second touch-sensitive surface area (312, 314),
- a first display (220), wherein said first input means (210) is arranged as a touch screen (230) of said first display (220),
- at least one force sensor (631-634), which is responsive to simultaneously applying a force to said first (212, 214) and second (312, 314) touch-sensitive surface areas, and which is adapted to determine a quantitative measure of the applied force, and
- a control unit (520) connected to said first and second input means (210, 310), to said at least one force sensor (631-634) and to said display (220), adapted to perform a predetermined function depending on input via said first and/or second input means (210, 310) and on at least one quantitative measure of an applied force determined by said at least one force sensor (631-634).

2. The electronic device of claim 1, further comprising a second display, wherein said second input means is arranged as a touch screen of said second display.

3. The electronic device of claim 1 or 2, wherein said predetermined function is performed depending on the orientation of a pressure axis (700), wherein said orientation is determined
- from a first location of a touching object on the first touch-sensitive surface area and a second location of a touching object on the second touch-sensitive surface area, and/or
- from at least one difference between quantitative measures of an applied force provided by at least two of said force sensors.

4. The electronic device of any one of claims 1 to 3, wherein said control unit (520) is adapted to detect a first input gesture (910, 920) inputted via said first touch-sensitive area and a second input gesture (912, 922) inputted via said second first touch-sensitive area.

5. The electronic device of claim 4, wherein said control unit is adapted to display at least one control element on said first and/or second display, and wherein said predetermined function is performed depending on a location of the first input gesture on the first touch-sensitive area and/or a location of the second input gesture on the second touch-sensitive area in relation to the display position of said control element on the first and/or second display.

6. The electronic device of claim 5, wherein said at least one control element is displayed in a display area (232) located at the edge of the first and/or second display.

7. The electronic device of any one of claims 4 to 6, wherein said predetermined function is performed depending on the relative direction of a first (910, 920) and a second (912, 922) input gesture, wherein the first input gesture (910, 920) having a first direction is defined by a sequence of detected locations of a touching object on the first touch-sensitive surface area and the second input gesture having a second direction is defined by a sequence of detected locations of a touching object on the second touch-sensitive surface area.

8. The electronic device of any one of the preceding claims, wherein the first touch-sensitive surface area (212, 214) is arranged in a first plane (200), said second touch-sensitive surface area (312, 314) is arranged in a second plane (300), and the at least one force sensor (631-634) is arranged between said first and second planes.

9. The electronic device of claim 8, wherein a plurality of force sensors (631-634) are arranged at different locations (401-404) in a third plane (400), said third plane being arranged between said first and second planes.

10. The electronic device of claim 9, wherein said first, second and third planes are essentially parallel.

11. The electronic device of any one of the preceding claims, further comprising at least one damping element (610, 621-624, 631-634) arranged between the first and second input means and/or between a force sensor and the first input means and/or between a force sensor the second input means.

12. The electronic device of any one of the preceding claims, wherein said first and/or second input means is adapted to simultaneously determine different locations of at least two touching objects on the respective touch-sensitive surface area.

13. Method for controlling an electronic device, in particular an electronic device according to any one of claims 1 to 12, comprising the steps of
- detecting a first input via a first input means (210) having a first touch-sensitive surface area (212, 214),
- detecting a second input via a second input means (310) having a second touch-sensitive surface area (312, 314),
- determining at least one quantitative measure of a force simultaneously applied to the first (212, 214) and second (312, 314) touch-sensitive surface areas by at least one force sensor (631-634)
- performing a predetermined function depending on said detected first and/or second inputs and on the at least one determined quantitative measure of a force.

14. Digital storage medium, comprising electronically readable control instructions, adapted for performing a method according to claim 13, when inserted into an electronic device according to any one of claim 1 to 12.
